# EUROPEAN PATENT APPLICATION

(11) **EP 1 700 527 A1**
(43) Date of publication of application: **13.09.2006**
(21) Application number: 05251456.9
(22) Date of filing: 10.03.2005
(51) Int. Cl.: A23L 1/23, A23C 19/06, A23C 19/082, A23C 19/09, A23C 19/032

(54) **Swiss-type cheese flavour compositions and food products made with same and their processes of manufacture**

(71) Applicant: Kraft Foods R&D, Inc., 81737 Munich (DE)
(72) Inventor: Wolfschoon, Alan-Frederick, D-85354 Freising (DE); Rose, Mehran, D-85662 Hohenbrunn (DE); Habermeier, Peter, D-85298 Scheyem (DE); Gass, Paul Victor, Glenview, Illinois 60025 (US)
(74) Representative: Smaggasgale, Gillian Helen

(57) **Abstract**

Swiss-type cheese flavor compositions are provided which can be used in food products for flavor addition, flavor enhancement, and as a substitute for natural Swiss cheese ingredients. It also relates to processes for rapid direct production of such cheese flavor compositions that do not require whey separation, block formation, curing or aging steps. The flavor compositions are manufactured by forming a mixture comprising a cultured milk concentrate prepared by treating milk concentrate with a lactic acid culture at a temperature of about 22 to about 45°C for about 10 to about 240 hours, and propionic acid or an edible salt thereof. The Swiss-type cheese flavor develops after addition of propionic acid or edible salt thereof.

## Description

### Field of the Invention

This invention relates generally to Swiss-type cheese flavor compositions which can be used in food products for flavor addition, flavor enhancement, and/or as a substitute for natural cured or aged Swiss cheese ingredients.

### Background of the Invention

A large number of Swiss-type cheeses are available on the market including, for example, Emmentaler, Svenbo, Jarisberg, Greve, Maasdamer, Leerdamaer, Comté, and Beaufort. Their body and texture correspond to those of hard and semihard cheeses. Emmentaler cheese is probably the best-known Swiss-type cheese and is frequently referred to simply as "Swiss cheese." In addition to its characteristic "eye" formations, Swiss cheese has a characteristic savory flavor, usually characterized as a "nutty sweet" flavor.

Natural Swiss cheese has been used as a flavoring ingredient in a wide variety of food products. Swiss cheese is used, for example, in some process cheese manufacture, such as Sottilette cheese. It is combined with one or more other natural comminuted cheeses which are incorporated into a cheese blend including emulsifying salts. The process cheese blend is heated, melted, and mixed (i.e., cooked, to form a homogenous molten mass), followed by cooling and solidification of the molten mass, which may be sliced prior to packaging. The natural Swiss cheese used in such a manner usually must be cold stored until used, cleaned, and ground, which entails added handling requirements and costs.

The manufacture of the natural Swiss cheese itself is relatively complicated and time-consuming, which also increases its cost. In a conventional scheme for making natural Swiss cheese, milk meeting relatively stringent quality control requirements is heated to a fermentation temperature and inoculated with three different species of bacteria starters: a coccus culture, a rod culture, and a propionic-acid forming microorganism. Lactobacilli (e.g., *Lactobacillus bulgaricus, Lactobacillus lactis, Lactobacillus Helveticus, Lactobacillus delbrueckii ss. lactis)* have been used as the rod culture; Streptococci (e.g., *Streptococcus thermophilus)* has been used as the coccus culture, and Propionibacteria (e.g., *Propionibacterium shermanii, Propionibacterium freudenreichii)* has been used as the propionic acid-forming microorganism.

Two major bacterial fermentations occur in the manufacture of traditional Swiss cheese. The first is the conversion of lactose to lactic acid by lactic acid bacteria during early stages of manufacture. The *Streptococci* culture generally acts as an initial and primary lactic acid producer. The *Lactobacilli* culture generally acts as a secondary acid-producer to help control cheese pH, as well as causing proteolysis in the later stages of curing and contributing to flavor compound formation. A second major bacterial fermentation that occurs during Swiss cheese manufacture is the conversion in cheese blocks of lactate to propionate, acetate, and carbon dioxide during an extended post-production curing or ripening period. Propionic acid is gradually generated during the post-production curing period and contributes to the flavor of Swiss cheese, while the carbon dioxide produced during the second fermentation is responsible for eye formation.

Numerous production steps and process control requirements are associated with Swiss cheese manufacture. In the production of Swiss cheese, a milk clotting enzyme, such as rennet, may be added in an amount suitable to coagulate inoculated heated milk and set it into a curd in practical period of time (generally less than about 1 hour). The initial fermentation stage normally may proceed at a temperature of about 29 to about 35°C. The curd is cut and may be worked such as for about 30 minutes to an hour. The curd is then cooked, for example at a temperature of between about 49 to about 54°C for about 30 minutes to about an hour, with stirring. Whey is removed and the curd is processed into blocks (e.g., by pressing), followed by brining and packing.

As understood in the art, the Swiss cheese blocks may be plastic wrapped during curing to retain moisture while permitting carbon dioxide to escape, to produce rindless Swiss Cheese in block form. To initiate the propionic acid fermentation, the cheese usually is stored at a temperature of approximately 20 to about 24°C for a period of time adequate for development of sufficient eyes, normally about 25 to about 60 days. Once development of sufficient eyes is accomplished, additional propionic acid fermentation is retarded by storing the cheese at a lower ripening temperature, normally about 10 to about 13°C. Swiss cheese usually is cured for a lengthy period of time, which is normally at least about four months, or may be even more than eight months, to attain its characteristic flavor, eye formation, and texture.

Cheese flavored substitutes for natural aged Swiss cheese are desired which are easier and less costly to manufacture and use. The present invention provides such products and processes for their manufacture.

### Summary of the Invention

The present invention relates generally to Swiss-type cheese flavor compositions which can be used in food products for flavor addition, flavor enhancement, and/or as a substitute for natural Swiss cheese ingredients. It also relates to a process for rapid direct production of a Swiss-type flavor concentrate that does not require whey separation, block formation, curing or aging steps.

In one aspect, a process for making a Swiss-type cheese flavor composition comprises, (A) treating a milk concentrate with a lactic acid culture at about 22 to about 45°C for about 16 to about 240 hours to prepare a cultured milk concentrate, and (B) introducing propionic acid or an edible salt thereof to either the milk concentrate in step (A) or to the cultured milk concentrate from step (A) in an amount effective to obtain the Swiss-type cheese flavor composition. In particular embodiments, the fermentation of the milk concentrate in step (A) is conducted at about 38 to about 44°C for about 16 hours to about 120 hours, and more particularly at about 39 to about 41°C for about 48 to about 60 hours.

The interaction of the propionic acid component with the cultured milk concentrate develops a characteristic Swiss flavor. The propionic acid, in its free acid form, may be combined with the cultured concentrate by combining it with cultured concentrate subsequent to the fermentation step, or, alternatively, by pre-combining it with the milk concentrate before or during the fermentation step, such that it is present as cultured concentrate is being generated during the fermentation step. If the propionic acid is added subsequent to the fermentation step, it may be admixed with the cultured concentrate per se to form an acidulated paste product. The resulting combination directly yields a Swiss-type cheese flavored, ready-to-use concentrate product requiring no further processing for flavor development. However, it is not mandatory to immediately combine the cultured concentrate product with free propionic acid. For instance, the cultured concentrate and the propionic acid may be separately incorporated into a common cheese base formulation, such as a process cheese mix, and their combination occurs within the cheese mix to effectively generate a Swiss-type cheese profile in the overall cheese mix.

Although the cultured milk concentrate is an uncured and non-aged medium at the time of propionic acid introduction, a Swiss cheese flavor profile is rapidly developed. The use of direct free acid addition to form a Swiss-type cheese flavored composition is particularly advantageous as it eliminates the need for conducting an extended post-production curing or ripening period to develop a Swiss (e.g., Emmentaler) cheese flavor. This direct manufacture of a Swiss-type cheese flavored product also eliminates the need to use propionic acid-generating cultures, although the present invention also sets forth certain improved variations of that approach as well. Propionibacterium have several significant growth limitations in dairy based media comprising milk concentrates which are avoided by this embodiment of the present invention. For instance, Propionibacterium generally are relatively slow growth organisms requiring a pH of at least 5.2; this limits the initial fermentation step using lactic acid cultures, and also potentially can lead to microbiological stability problems in the media due to the extended fermentation periods associated with Propionibacterium growth and *in situ* propionic acid generation.

In one particular aspect, distinctive Swiss flavor is provided in a non-aged cultured milk concentrate/propionic acid mixture by introducing free propionic acid in an amount ranging from about 0.5 to about 2.0 percent, and particularly about 0.75 to about 1.5 percent, based on the total mixture weight. If the propionic acid is added at a process cheese cooker, for instance, the respective addition amounts are similar based on these two components in isolation from the remainder of the cheese mix ingredients. In another aspect, distinctive Swiss flavor is provided in a non-aged cultured milk concentrate/propionic acid mixture by adding free propionic acid in an amount of at least 75 percent, particularly at least 90 percent, and more particularly at least 100 percent, more than the amount of propionic acid that would be present in an equal mass of natural Swiss cheese generally prepared by culturing skim milk and fermentation agents including the lactic acid culture and propionibacteria, followed by whey separation, and aging in pressed block form for about 6 months. In one aspect, the amount of "excess" propionic acid introduced into the mixture according to the above-indicated criteria is about 90 to about 110 percent.

In one aspect, the milk concentrate used as the starting material or substrate is 3X-8X ultrafiltered/diafiltered skim milk concentrate or other high solids retentates or dairy concentrates having similar compositions. The lactic acid culture may comprise thermophillic *Lactobacilli,* mesophillic *Lactobacilli,* or a combination thereof. In a preferred embodiment, the lactic acid culture comprises rod and cocci cultures comprising thermophillic *Lactobacilli* and *Streptococcus* thermophilus. Free propionic acid is combined with the resulting cultured concentrate in an amount sufficient to directly provide a Swiss-type cheese flavored paste product without the need to cure the cheese product.

In an alternative embodiment of the present invention, propionic acid may be generated *in situ* in certain dairy media combinations via introduction of *propionibacteria* therein, and then the inoculated media is fermented at an incubation period and for a time sufficient for *in situ* propionic acid development adequate to allow Swiss-type cheese flavor to be developed. In this embodiment, Swiss-type flavor profile may be developed within a time period which is significantly shorter than traditional Swiss cheese manufacture. This is made possible in part by a particular formulation of the substrate media and selection of cultures. A lactate-containing medium is used in combination with fresh (uncultured) milk concentrate as the substrate material. In one aspect, the lactate-containing medium preferably includes 1) cultured milk concentrate previously prepared with a lactic acid culture and 2) enzymatically-modified milk concentrate in which fresh milk concentrate has been pre-modified with lipase and protease enzymes. Media formulated as a combination of these different types of substrates allows a Swiss-type flavor to be developed relatively rapidly, such as within about 240 hours, in the presence of *propionibacteria.* The proportions of various milk concentrates used in this embodiment generally are i) about 30 to about 60 percent fresh non-cultured milk concentrate, ii) about 0.5 to about 20 percent cultured milk concentrate, and iii) about 0.1 to about 10 percent enzyme-modified milk concentrate. The *propionibacterium* fermentation step may be completed (as evidence by Swiss-type cheese flavor development) within about 24 to about 240 hours at an incubation temperature of about 20 to about 42°C, and particularly within about 48 hours to about 96 hours at an Incubation temperature of about 27 to about 32°C.

The Swiss-type cheese flavor concentrate product obtained by direct addition of free propionic acid to the cultured concentrate may be in paste form or powder form. The paste form can be conveniently stored, handled, and subsequently used in other food manufacture. The paste form of the flavor concentrate is characterized as a viscous mass having a spreadable consistency. The pasty consistency is provided without the need to use cheese coagulants, such as rennet, commonly used in cheese manufacture. The Swiss-type cheese flavor concentrate paste is in a ready-to-use form, and it does not need not be ground, sliced, cut, or cleaned, etc., unlike natural hard Swiss cheese. In another aspect, the flavor concentrate paste may be converted into a dried powder form, such as by spray drying.

As other advantages of the present invention, the Swiss-type cheese flavor composition can be directly obtained from milk concentrate as a starting material without the need to remove whey by-product or form cheese blocks. The Swiss-type cheese flavor compositions can acquire a distinctive Swiss cheese flavor within a period of days instead of the multiple months normally required to age natural Swiss cheese sufficiently to impart Swiss flavor. Swiss-type cheese flavor compositions having flavor profiles comparable to or mimicking natural aged Swiss cheese are provided using straightforward processing that does not require an extended curing or aging step. Fewer manufacturing steps and significantly less time is needed to prepare the Swiss-type flavor compositions.

The Swiss-type cheese flavor compositions provided may be incorporated into other bulk foods, such as process cheeses, snack foods, natural cheeses, cheese spreads, and the like, to impart or intensify a Swiss cheese flavor in them. They also may be used as substitutes for natural Swiss cheese ingredients otherwise intended to be used in food products. For instance, in process cheese manufacture, the Swiss-type cheese flavor compositions may be used to reduce up to about 50 percent of natural Swiss cheese ingredient requirements without adversely impacting product processing ease, functionality, or the desired product organoleptic attributes. The reduction in natural Swiss cheese in particular and dry matter levels in general of a processed cheese formula achieved by using the Swiss-type cheese flavor compositions as a substitute for some portion thereof can lead to significant cost savings. Normal handling operations, such as refrigerated storage, cleaning, grinding, and the like, normally needed for natural cheese also are reduced or eliminated by using the Swiss-type cheese flavor compositions.

### Brief Description of the Drawings

FIG. 1 is a flow chart of a process for providing a Swiss-type cheese flavor composition and its exemplified use in process cheese manufacture, according to an embodiment of the invention.
FIG. 2 is a flow chart of a process including several alternatives for providing a Swiss-type cheese flavor composition and its use in process cheese manufacture, according to another embodiment of the invention.
FIG. 3 is a flow chart of a process for providing a Swiss-type cheese flavor composition and its use in process cheese manufacture, according to another embodiment of the invention.

### Detailed Description

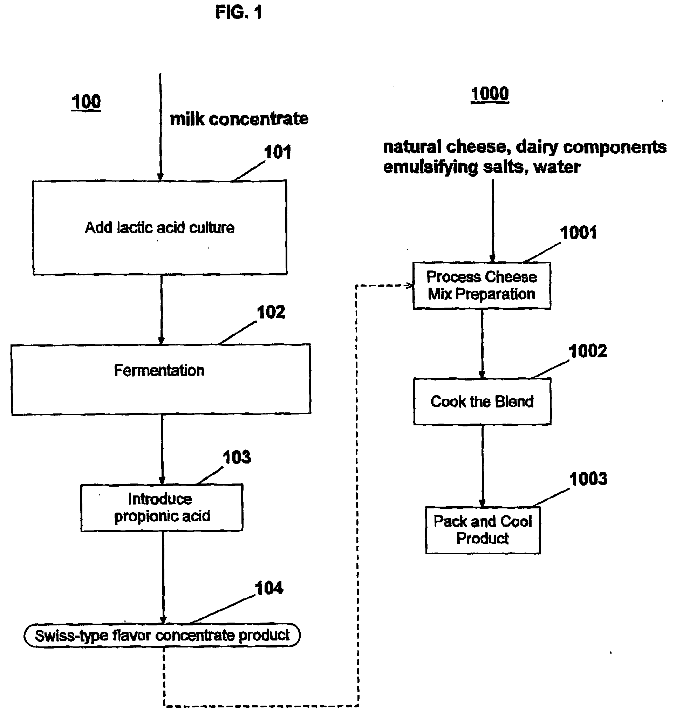

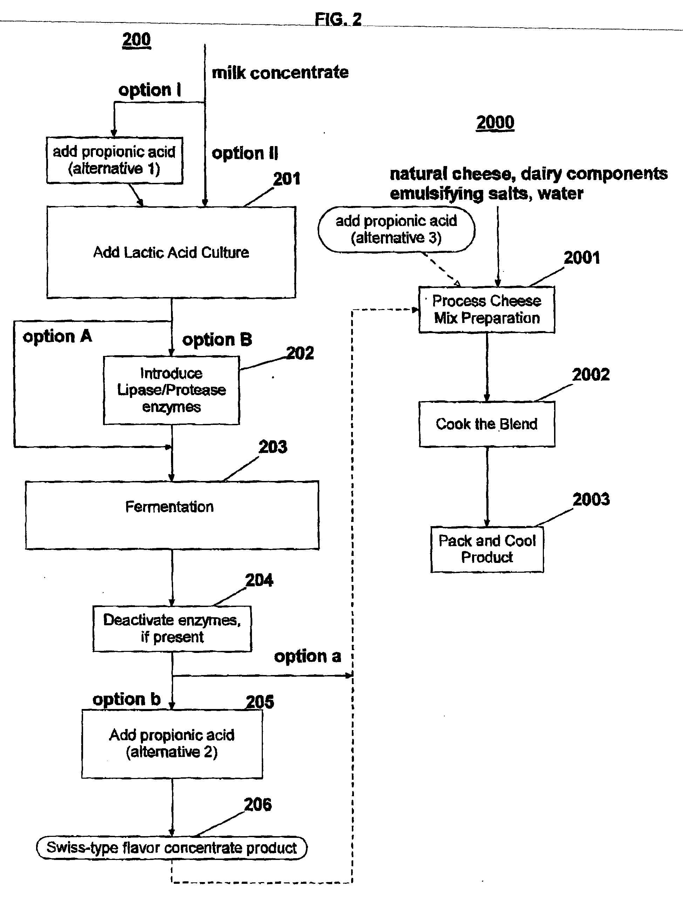

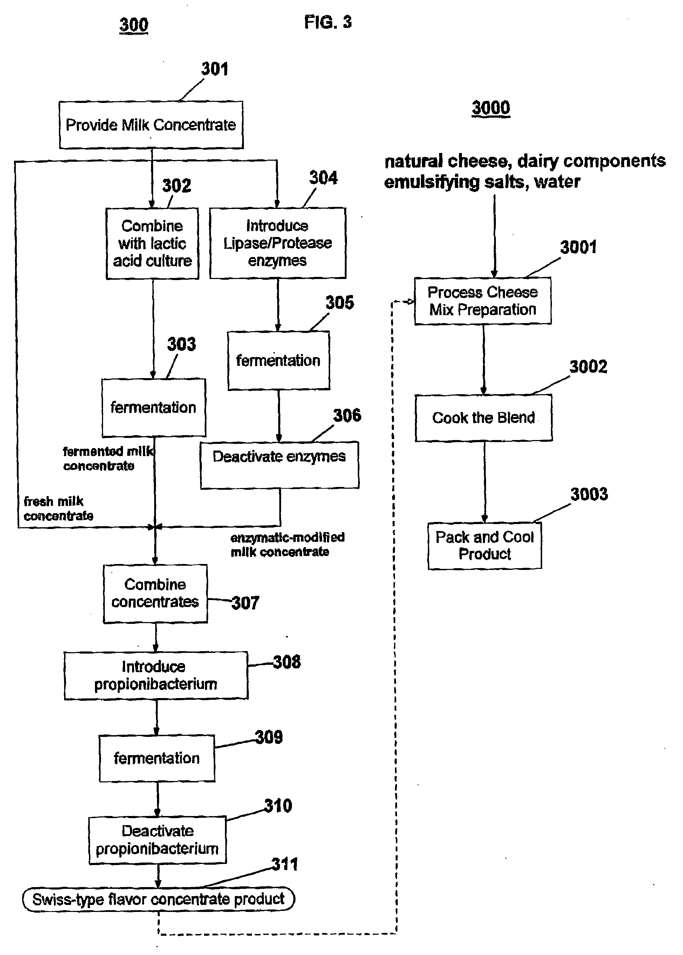

Referring to FIG. 1, a process 100 is generally indicated for providing a Swiss-type cheese flavor concentrate according to an embodiment of the present invention. As indicated, the cheese flavor concentrate which is obtained may be used as a flavoring ingredient in the manufacture of food products, such as process cheese manufacture 1000. FIGS. 2 and 3 generally illustrate alternative approaches (200, 300) for providing Swiss-type cheese flavor compositions according to other embodiments of the present invention. In these illustrations a milk concentrate is used as the substrate (or at least as a portion thereof), which is processed to form a cultured dairy product, which is combined with propionic acid or an edible salt thereof added in free form or formed *in situ,* sufficient to form a mixture having a distinctive Swiss-type cheese flavor.

Although manufacture of a flavor composition having a flavor profile comparable to Emmentaler cheese, i.e., "Swiss cheese," is illustrated herein, it will be appreciated that the present invention has broader application to providing replicate flavors of any Swiss-type cheese in which propionic acid fermentation is common. Such Swiss-type cheeses include, for example, Emmentaler, Svenbo, Jarisberg, Greve, Maasdamer, Leerdamaer, Comté, and Beaufort.

Substrate Materials. As indicated in the figures, the substrate used for the process preferably is a fluid milk concentrate. However, the substrate or starting material generally may be a dairy product comprising a combination or mixture of an aqueous protein source and a fat source. The diary product can be a milk concentrate, a milk substrate, a whey concentrate, a whey substrate, or combinations of these dairy substances with each other, in combination with a supplemental protein or fat source. The dairy product generally will be in the form of an aqueous protein and fat source combination, It can be in emulsion form.

The dairy products, such as a fluid milk concentrate, useful as the substrate material generally have total solids contents of about 30 to about 50 percent, protein contents of about 10 to about 19 percent, fat contents of about 15 to about 30 percent, and lactose contents of about 0.1 to about 10 percent. Preferably, they have total solids contents of about 35 to about 47 percent, protein contents of about 12 to about 17 percent, fat contents of about 18 to about 25 percent, and lactose contents of about 0.5 to about 8 percent. The moisture levels of the dairy product are generally from about 50 to about 70 percent, preferably from about 53 to about 65 percent.

The protein source can be a dried protein or concentrated material and is preferably a dairy ingredient, such as milk protein concentrate, fractionated milk protein, concentrated milk fat, whey protein concentrate, dried whey, non-fat dry milk, or mixtures thereof. Other protein sources, such as soy protein, com protein, wheat protein, and/or rice protein, can be used in part or as the sole protein source. The fat source is preferably a milk fat such as anhydrous milk fat, butter, cream, or mixtures thereof. Other non-dairy fat sources, such as vegetable oil, can be used in part or as the sole fat source. The prefermentation pH of the milk concentrate or other substrate is generally in the range of about 5.6 to about 7 and preferably in the range of about 6.5 to about 6.7. In general, at least one of the protein and fat sources will include a dairy ingredient in the practice of this invention to provide a highly useful starting material from which flavor which is normally or otherwise associated with Swiss cheese products can be developed.

A dried protein source, if used, is reconstituted with water. The water is used at a level sufficient to provide total moisture of from about 50 to about 70 percent, preferably from about 53 to about 65 percent in the substrate. The reconstituted protein source is combined with the fat source to provide the substrate. If necessary, the pH of the substrate can be lowered to the proper range (i.e., about 4.0 to about 5.6 and preferably about 4.6 to about 5.2) by the addition of an edible acid or by use of a lactic acid producing microorganism. Suitable edible acids are non-toxic, inorganic or organic acids, which include hydrochloric acid, acetic acid, maleic acid, tartaric acid, citric acid, phosphoric acid, lactic acid, and mixtures thereof. In preparing the milk concentrate, a homogenization device can be used to reduce the fat droplet particle size and insure homogeneity of the substrate.

In one embodiment, the dairy product used as the starting material is an aqueous milk-derived concentrate or substrate that is a fluid milk concentrate prepared by ultrafiltration (alone or even more preferably combined with diafiltration) or a reconstituted milk substrate prepared from a mixture of an ultrafiltered (UF) or ultrafiltered/diafiltered (UF/DF) milk powder and milk fat. The starting material can be an UF/DF milk having the following characteristics:

| | Typical (%) | Preferred (%) |
|---|---|---|
| Total Solids | 30-50 | 35-47 |
| Moisture | 50-70 | 53-65 |
| Fat | 15-30 | 18-25 |
| Protein | 10-19 | 12-17 |
| Lactose | 0.1-10 | 0.5-5 |
| Salt | 1-3 | 1-2 |
| Ash | 0.5-25 | 1-2 |
| pH | 5.6-7 | 6.5-6.7 |

These milk concentrates can be used as is or in combination with a supplemental fat source to provide the substrate. For instance, dairy products useful as substrates for the processes of the present invention can be prepared from concentrated whole or skim milk with, if desired, added cream or anhydrous milk fat (AMF). The cream or AMF generally is added in an amount of about 0 to about 20 percent, preferably about 2 to about 15 percent, by weight of the mixture. In one embodiment for making the dairy product, sweet milk or sweet skim milk is subjected to conventional ultrafiltration/diafiltration techniques to produce an about 3x to about 8x (preferably about 5x) milk concentrate product. The milk concentrate is a high solids retentate. Cream or anhydrous milk fat or a combination thereof may be mixed with the milk concentrate. In one exemplary non-limiting embodiment, the resulting prefermentation mixture is homogenized, and pasteurized under high temperature short time (HTST) conditions, such as at about 76°C for about 16 seconds in a heat exchanger, and then it is cooled to about 21 to about 27°C. The resulting dairy product can be used as the substrate or starting material that is subjected to fermentation to prepare the Swiss-type cheese flavor composition of the present invention. Preferably, about 1 to about 2 percent salt is added to the dairy product prior to treatment with the various cultures and propionic acid used to produce the Swiss-type flavored product. The pasteurized dairy product is a relatively viscous liquid, preferably containing about 30 to about 50 percent solids.

### Substrate Processing: A. Swiss-Type Flavor Composition Prepared

With Free Propionic Acid Addition*.* Referring to FIG. 1, a process 100 is illustrated in which a milk concentrate is used as the starting material (substrate), which is fermented with a lactic acid culture to form a cultured dairy product, and then the cultured dairy product is subsequently combined with separately added free propionic acid or an edible salt thereof to form a Swiss-type cheese flavor concentrate product, which thereafter may be used as a flavoring additive in process cheese manufacture or other food processing.

Remarkably, direct acidification of lactic acid cultured-milk concentrates with propionic acid has been found to directly provide a Swiss-type cheese flavored product in a media pre-cultured with a lactic acid culture for less than about 240 hours, particularly less about 120 hours, and more particularly less than about 60 hours. By comparison, use of *propionibacteria* to generate propionic acid *in situ* will require an added time-consuming fermentation step (generally about 30 days or more) which must be conducted at a pH above 5.2, which limits the initial fermentation step. The use of direct propionic acidification of lactic acid cultured-milk concentrates according to one embodiment of the present invention provides a Swiss-type cheese flavor profile within a relatively short incubation period without the need to cure the cheese product under controlled conditions for about thirty days or even longer, as traditionally done in Swiss cheese manufacture in order to provide all the metabolites/factors generated by *propionibacterium* fermentations in the cheese system during such curing of Swiss cheese. Also, shortening the incubation period(s) involved also has the advantages of increasing production output while helping to avoid microbiological instability which may be more apt to arise in dairy concentrate substrates if a protracted incubation period is needed.

Referring to FIG. 2, the propionic acid, in its free acid form, may be combined with the cultured concentrate pursuant to three different alternatives from a process timing standpoint, It may be combined with cultured concentrate subsequent to the fermentation step (according to two different alternatives), or it may be pre-combined with fresh (uncultured) milk concentrate starting material such that it is already present as cultured concentrate is being generated during the fermentation step. If the propionic acid is added subsequent to the fermentation step, it may be admixed directly with the cultured concentrate to form an acidulated paste product. The resulting combination directly yields a Swiss-type cheese flavored, ready-to-use concentrate product requiring no further processing for flavor development. However, it is not mandatory to immediately combine the cultured concentrate product with free propionic acid. The cultured concentrate and the propionic acid also may be separately incorporated into a common cheese base formulation, such as a process cheese mix, and their combination occurs within the cheese mix to generate *in situ* a Swiss-type cheese profile in the overall cheese mix.

The preparation of the Swiss-type cheese flavor composition generally is carried out by inoculating the substrate with a lactic acid culture (step 201), and optionally lipase and protease enzymes (step 202). The optional enzyme treatment does not yield free propionic acid, which is a major component of Swiss cheese flavor characteristic, but it can help to round out the product flavor profile. The inoculated substrate is fermented in a single-stage fermentation process (step 203). Enzymes present are thermally inactivated after fermentation (step 204). If propionic acid has not been pre-mixed with the milk concentrate, the resulting cultured milk concentrate intermediate can be immediately treated with propionic acid, or, alternatively, it may be stored under chilled conditions (e.g., about 4°C) until a more convenient time for that treatment (step 205), or may combined with propionic acid in the process cheese mix.

Prior to inoculation and fermentation, the milk concentrate substrate optionally may be homogenized and pasteurized under high temperature short time (HTST) conditions before fermentation of the mixture. This additional treatment aids in reducing the fat droplet particle size and insures homogeneity of the substrate prior to fermentation. The resulting mixture can be used as the starting material that is subjected to fermentation.

Also prior to fermentation, common cheese concentrate additives and processing aids also may be optionally included with the milk concentrate substrate in minor amounts sufficient for their intended respective functions, such as salt, thickeners (e.g., xanthan gum), emulsifiers, supplemental starter media for cheese cultures (e.g., yeast hydrolysate), and so forth.

As another option, the pH of the substrate can be lowered prior to fermentation to a suitable range for flavor development (i.e., about 4.6 to about 6 and preferably about 4.8 to about 5.6) by the addition of lactic acid alone or in combination with other edible acids, and then fermentation is carried out. If used in conjunction with lactic acid, suitable edible acids include, for example, hydrochloric acid, acetic acid, maleic acid, tartaric acid, citric acid, phosphoric acid, and mixtures thereof.

The preparation of a cultured milk concentrate is carried out by adding a lactic acid culture to the milk concentrate as substrate. The lactic acid culture used should convert lactose to lactic acid and reduce the pH. In general, the inoculated substrate is fermented in the presence of the lactic acid culture at temperature and for a time sufficient to provide homofermentative catabolism of lactose to greater than 90 percent lactate. This endpoint generally corresponds with a reduction in the pH of the fermenting mixture of from about 5.6 to about 4.0. For lactic acid culturing, the inoculated milk concentrate is fermented at a temperature of at about 22 to about 45°C for about 16 hours to about 240 hours, particularly about 38 to about 44°C for about 16 hours to about 120 hours, and more particularly at about 39 to 41 °C for about 48 to about 60 hours.

The lactic acid culture used in the present invention include those commonly used in lactic acid fermentation associated with natural Swiss Cheese production including thermophillic and/or mesophillic bacteria suitable for that purpose. In one preferred embodiment, a mixed starter culture combines thermophillic *Lactobacilli* and a *Streptococcus thermophilus* to stimulate Swiss-type cheese flavor culturing. When thermophillic cultures are used, preferably a coccus culture and rod culture combination is used. For instance, the rod culture may comprise *Lactobacillae* and the coccus culture may comprise *Streptococcus thermophilus.* The *Lactobacillae* may be selected, for example, from *Lactobacillus bulgaricus, Lactobacillus lactis, Lactobacillus Helveticus, Lactobacillus delbrueckii* ss. *lactis,* or mixtures thereof. In one preferred aspect, a *Lactobacillae* rod culture is generally added to the fermentation mixture at a level of about 0.005 to about 0.2 percent, particularly about 0.01 to 0.02 percent, and the *Streptococcus thermophilus* culture is generally added at a level of about 0.005 to about 0.2 percent, particularly about 0.01 to about 0.02 percent. Mesophillic lactococcal fermentation can be used to generate significant amounts of lactic acid at a pH above 5.0 and at 30°C.

As generally known mesophilic culture strains of lactic acid bacteria generally have an optimum growth temperature at about 30°C, and thermophillic culture strains of lactic acid bacteria generally have optimum growth temperatures in the range of about 40 to about 45°C. Examples of the thermophilic bacteria include the above-identified rod and coccus cultures. Commercial sources of thermophillic *Streptococcus thermophilus* bacteria include TH-3 and TH-4 from Chr. Hansen A/S, Hørsholm, Denmark. Preferably, the cultures are direct vat set (DVS) cultures, although in-house bulk starters also may be used. Examples of the mesophilic bacteria include, for example, *Lactococcus lactis* subsp. *lactis, Lactococcus lactis* subsp, *cremoris, Lactococcus lactis* subsp. *lactis* biovar *diacetylactis, Leuconostoc lactis, Leuconostoc mesenteroides* subsp. *cremoris, Pediococcus pentosaceus,* and *Lactobacillus casei.* Commercial sources of mesophillic *Lactococcus lactis* bacteria include, for example, R-603, R-604 and R-607 from Chr. Hansen A/S, Horsholm, Denmark.

Suitable lactic acid culture enzymes of the above types can be produced from various microorganisms or extracted from plant or animal tissues. The various enzymes of the enzyme system are available commercially as dry powder or in liquid form. Phase separation generally is not a significant problem during fermentation.

Regarding the optionally included enzymes in step 202, lipase (sometimes referred to as an esterase) is an enzyme which is well known in the art. Lipase are typically derived from the gullet tissues of young animals (calves, goat kids, or lambs), from the pancreas of adult animals, or from microbial sources. Various commercial preparations derived from gullet tissue are available from Degussa, Rhodia, or other such suppliers under various trade names. The enzyme can be manufactured by grinding edible gullet with salt and non-fat dry milk, drying the mixture, and grinding again. Microbial sources of lipase are, for example, the molds *Candida cylindracea* Type VIII, *Aspergilus oryzae, A. niger, Pencillium roqueforti, P. glaucum,* and *Rhizopus oryzae.*

A powdered lipase, preferably a fungal lipase, is generally used at a level of about 0.05 to about 0.4 percent. A suitable fungal lipase is commercially available from Biocatalysts under the tradename Lipomod 187.

Proteases are enzymes which can be derived from fungal, plant, or animal sources, as is well-known in the art. Examples of suitable proteases include Enzeco Neutral Bacterial Protease 2X available from Enzyme Development Corp. and Promod 215 available from Biocatalyst. The powdered proteases are generally used at levels of from about 0.01 to about 1 percent, preferably at levels of from 0.1 to about 0.4 percent. A mixture of lipase and proteases enzymes may be commercially obtained in preblended form, such as R2 enzyme from SKW.

The fermentation vessel used is preferentially provided with mixing equipment to insure good contact between the cultures, enzymes and the substrate materials and to maintain the solids in suspension. A scraped surface-mixing tank is preferred. A recirculation and homogenization device may be employed to prevent segregation of a fat phase from aqueous materials and to aid in maintaining the solids in suspension. Water may be added during the fermentation to maintain desired moisture content and acidic or basic materials may be added to adjust the pH.

The growth and metabolic activity of the lactic acid starter culture based on this combination of strains can be enhanced. Generally, the growth rate and the metabolic activity of lactic acid bacterial starter cultures can be controlled by selecting appropriate growth conditions for the stains of the specific starter culture used such as appropriate growth temperature, oxygen tension and nutrient content. For instance, reduction of oxygen content of the milk, such as by open system heating, vacuum deaeration, sparging or addition of oxygen scavengers, generally results in a more rapid acidification of the inoculated milk.

For instance, the fermented mixture optionally may be subjected to aeration either during at least part of the fermentation procedure, or, alternatively, immediately thereafter and before a subsequent culture inactivation heat treatment, to prevent anaerobic conditions and to provide good mixing. Aeration is preferably effected using air introduced into the reaction mixture using a diffusion plate or an in-line air sparger. If appropriate or desirable (e.g., if phase separation occurs or is possible), the reaction mixture can optionally be homogenized prior to further treatment. Preferably, aeration is discontinued throughout the subsequent heat inactivation process.

The flavor level of the cultured milk concentrate can be judged before further processing organoleptically and can be estimated through analytical measurements, such as pH, titratable acidity, and concentration of free fatty acids and amino acids.

After conducting the fermentation of the milk concentrate, and any aeration step, the cultures and enzymes in the fermented mixture are inactivated, such as by heating it to a temperature and holding at that temperature for a time sufficient to inactivate the culture and enzyme systems (step 204). This may be accomplished by heating (i.e., pasteurization) the fermented mixture to about 63 to about 88°C for about 16 seconds to about 30 minutes, preferably to about 85°C for about 30 minutes. In one aspect, the before cooling the product concentrate, the concentrate is heated rapidly to about 100°C with mixing (in, for example, a Thermomix (Vorweck) mixer at mixing setting 3), and then heated at 85°C for about 30 minutes. The heat treatment can be performed in a heat exchanger or other convenient heating system. This inactivation step aids in stabilizing the cultured concentrate before further processing involving acid addition, which is described below.

The cultured milk, concentrate is treated by addition of propionic acid or an edible salt thereof (step 205). Preferably pure (100 percent) or essentially pure food-grade propionic acid is used. Propionic acid (CAS Reg. No. 79-09-04) generally has the formula H₃C-CH₂-C(=O)-OH, although it will be appreciated that the present invention does not exclude use of substituted forms of propionic acid to the extent modified forms thereof are effective for purposes herein. Propionic acid is an approved flavoring substance in Europe, for example, and thus offers the added advantage of avoiding some regulatory restrictions that may otherwise apply to preservative type additives. Edible water-soluble salts of propionic acid also may be used, such as sodium propionate, potassium propionate, calcium propionate, magnesium propionate, and the like.

In one aspect, distinctive Swiss flavor is developed in a cultured milk concentrate/propionic acid mixture by adding free propionic acid in an amount of at least 75 percent, particularly at least 90 percent, and more particularly at least 100 percent, more than the amount of propionic acid that would be present in an equal mass of natural Swiss cheese generally prepared by culturing milk and fermentation agents including the lactic acid culture and propionibacteria, followed by whey separation, and aging/curing in pressed block form for about 6 months.

In one aspect, the amount of "excess" propionic acid introduced into the mixture according to the above-indicated criteria is about 90 to about 110 percent. The interaction of the propionic acid component with the cultured milk concentrate component has been discovered to develop a characteristic Swiss flavor. Although not desiring to be bound to a theory, the "interaction" may be physical, biochemical, or both. This result is considered surprising because in traditional manufacture of natural Swiss Cheese using lactic acid and propionic acid-generating cultures and a (non-concentrated) milk substrate, cheese blocks typically must be aged for many months to develop the characteristic Swiss flavor.

In one aspect, the above amounts of "excess" propionic acid introduced into the cultured milk concentrate/propionic acid mixture are provided by introducing about 0.05 to about 0.15 percent, particularly about 0.75 to about 1.25 percent, propionic acid on a pure (100 percent) basis. The propionic acid or salt thereof preferably is added in pure or essentially pure form. The remainder of the cultured milk concentrate/propionic acid mixture is essentially comprised of the cultured milk concentrate.

Mixing of the cultured milk concentrate and propionic acid can be performed in any convenient manner and equipment which provides a substantially uniform mixture of ingredients. For instance, the components may be mixed together using a conventional mixer or blender at about 1 to about 35°C for about 1 to about 10 minutes.

The Swiss-type cheese flavor concentrate product obtained has a paste-like consistency and texture (step 206). For instance, it is a paste at temperatures of about 4 to 24°C, such that it can be conveniently stored, handled, and subsequently used in other food manufacture. The paste form of the Swiss-type flavor concentrate is characterized as a viscous mass having a spreadable consistency. The pasty consistency is provided without the need to use cheese coagulants, such as rennet or alkaline earth salt solidifying agents commonly used in cheese manufacture. The Swiss-type cheese flavor concentrate paste is in a ready-to-use form, and it does not need not be ground, sliced, cut, cleaned, or the like as in the conventional manufacture of a natural hard Swiss cheese. In another aspect, the flavor concentrate paste may be converted into a dried powder form, such as by spray drying.

Unlike conventional manufacture of Swiss cheese, there is no whey drainage step used or needed after fermentation. In addition, no cheese blocks need to be formed, and no post-production curing or aging time period is needed to develop the desired Swiss flavor in the product.

Cheese flavor building blocks optionally may be prepared using principles of this invention which may be used as a cultured cheese concentrate product by itself which may incorporated, for example, into a separately prepared batch of the Swiss-type cheese flavor paste made with different cultures and/or in process cheeses made therewith, to improve upon the cheese perception, and further reduce the actual Swiss cheese content of the product. Cheese flavor building block materials which may incorporated include creamy-buttery, sulfury, and/or cheesy building blocks or cultured cheese concentrates, such as those described in U.S. Pat. Nos. 6,406,724 B1 and 6,562,383 B1, which descriptions are incorporated herein by reference. A sulfury flavor block may be prepared, e.g., by culturing ultrafiltered/diafiltered (5X) milk concentrate with mesophillic lactic, *micrococcus,* and *Brevibacterium linens* cultures at an incubation temperature of about 22°C for about 8 days, and heat treating the cultured product for about 15 minutes at 68°C. A creamy-buttery flavor block may be prepared, e.g., by culturing ultrafiltered/ diafiltered (5X) milk concentrate with mesophillic lactic, *diacetylactis,* and *Leuconostoc* cultures at an incubation temperature of about 30°C for about 8 days, and heat treating the cultured product for about 15 minutes at 68°C.

### B. Swiss-Type Flavor Concentrate Prepared With In Situ Generated

Propionic Acid. Referring to FIG. 3, in an alternate process 300, *Propionibacteria* are used to produce propionic acid *in situ* in a dairy substrate via fermentation, in which the diary substrate comprises a blend of non-cultured (fresh) milk concentrate, lactic acid-cultured milk concentrate, and enzyme-modified milk concentrate. Although generation of propionic acid by use of *Propionibacteria* is used in production of natural Swiss cheese, the present invention provides a new technique which uses *in situ* propionic acid generation to develop Swiss-type flavor in a significantly shortened time period as compared to traditional Swiss cheese manufacture.

When the propionic acid is generated *in situ,* the milk concentrate preferably is a blend of non-cultured, lactic acid-cultured, and enzyme-modified milk concentrates to provide a more rounded Swiss cheese flavor. The cultured milk concentrate component of the blend preferably comprises a concentrate made similar to the lactic-acid cultured milk concentrate made according to the above-described processes. The non-cultured milk concentrate component may comprise the "substrate" materials described above and/or "concentrated milk" as that term is defined under the U.S. Federal Standards of Identity (e.g., 37 CFR 131.115). The enzyme-modified milk concentrate component of the blend may be provided by modification of fresh milk concentrate with lipase and proteases, such as discussed above in connection with FIG. 2.

In one aspect, the lactate-containing medium preferably includes 1) cultured milk concentrate previously prepared with a lactic acid culture and 2) enzymatically-modified milk concentrate in which fresh milk concentrate has been pre-modified with lipase and protease enzymes. Media formulated as a combination of these different types of substrates allows a Swiss-type flavor to be developed relatively rapidly, such as within about 240 hours, in the presence of *propionibacteria.* The proportions of various milk concentrates used in this embodiment generally are i) about 30 to about 60 percent fresh non-cultured milk concentrate, ii) about 0.5 to about 20 percent cultured milk concentrate, and iii) about 0.1 to about 10 percent enzyme-modified milk concentrate.

The *propionibacterium* fermentation step may be completed (i.e., Swiss-type cheese flavor is developed) within about 25 hours to about 240 hours at an incubation temperature of about 20 to about 42°C, and particularly within about 48 hours to about 96 hours at an incubation temperature of about 20 to about 35°C. The fermentation is allowed to proceed until the pH is about 5.6 to about 4.0. Then, the cultures are thermally inactivated, providing a stable Swiss-type cheese flavor concentrate.

The propionibacteria used to generate propionic acid *in situ* may be, e.g., *Propionibacterium shermanii, P. acidi-propionici, P. freudenreichii, P. pentosaceum, P. thoenii, P. arabinosum, P. rubrum, P. jensenii, P. peferssonii,* and related species. Suitable *propionibacterium* strains are available from the American Type Culture Collection (ATCC). The propionibacteria are generally added at a level of about 0.005 to about 0.2 percent, particularly about 0.01 to about 0.02 percent.

### Swiss-Type Cheese Flavor Profile of Composition/Concentrate Product.

The determination of whether a given mixture of cultured milk concentrate/propionic acid that is undergoing or has undergone processing according to aspects of this invention has a flavor profile characteristic to Swiss cheese can comprise qualitative and/or quantitative assessments. From a qualitative standpoint, an organoleptic taste test can be performed on a sample to determine if it has a nutty flavor comparable to natural aged Swiss cheese. Exact similarity or exclusivity is not required, but instead the standard is whether a characteristic Swiss cheese note can be detected via taste in the product sample. From a quantitative standpoint, the volatile flavor components of a product may be assessed to determine whether it has a characteristics/profile as shown in the table below which correspond to aged Swiss Cheese (cheese age: 6 months).

**Table I: Typical. Assay for "Swiss-Type" Cheese Flavor:**

| **Constituent** | **Amount (per kg dry material)** |
|---|---|
| propionic acid | 60 ± 5 mmol |
| acetic acid | 48 ± 2 mmol |
| succinic acid | 4 ± 1 mmol |
| butyric acid | 1 ± 0.5 mmol |
| methional | 68 ± 22 µg |
| ethyl butanoate | 73 ± 23 µg |
| ethyl 3-methylbutanoate | 0.8 ± 0.3 µg |
| ethyl hexanoate | 164 ± 63 µg |
| 4-hydroxy-2,5-dimethyl-3(2H)-furanone | 658 ± 297 µg |
| 5-ethyl-4-hydroxy-2-methyl-3(2H)-furanone | 255 ± 86 µg |
| 2,3-butandione | 605 ± 354 µg |
| 2-methylbutanal | 251 ± 43 µg |
| 3-methylbutanal | 167 ± 16µg |
| 2-heptanone | 770 ± 57 µg |
| dimethyltrisulfide | 0.16 ± 0.08 µg |
| 1-octen-3-one | 0.05 ± 0.02 µg |
| 2-sec-butyl-3-methoxy-pyrazine | 0.05 ± 0.03 µg |
| skatole | 34 ± 6µg |
| decatactone | 1680 ± 97 µg |
| 3-methylbutyric acid | 30 ± 10 mg |
| ammonia | 720 ± 160 mg |

The above listing is illustrative only and not to be considered either necessary or exhaustive. The flavor composition may contain other potent aroma or flavor compounds which have not been detected as well as the listed potent aroma or flavor compounds outside the listed ranges; the flavor composition may lack some of the listed aroma or flavor compounds as well. Literature indicates that methional, acetic acid and propionic acid are the most important volatile compounds for the typical Emmentaler flavor, i.e., a "nutty" flavor, while ethyl butanoate, ethyl 3-methylbutanoate and ethyl hexanoate contribute to a fruity odor note, and the two furanones are responsible for a caramel-like flavor. See, e.g., Bachmann, H.P. et al, "Swiss-Type Cheese," Aug. 2001, No. 424, FAM Swiss Federal Dairy Res. Station, Liebefeld CH-3033 Berne, Switzerland, pp. 1-13.

Food Products. The Swiss-type cheese flavor concentrate may be incorporated into bulk foods, such as process cheeses, snack foods, natural cheeses, cheese spreads, cottage cheese, and the like, to impart or intensify a Swiss cheese flavor in them. It also may be used as a substitute for natural Swiss cheese ingredients otherwise intended to be used in food products. For instance, manufacturing process 2000 in FIG. 2, and manufacturing process 3000 in FIG. 3, illustrate the use of the Swiss-type cheese flavor concentrate in process cheese making. However, it is not required to immediately combine the cultured concentrate intermediate product with free propionic acid. For instance, the cultured concentrate and free propionic acid also can be separately added to a process cheese mix for combination in the presence of other process cheese ingredients in the manufacture of a process cheese which has a Swiss-type cheese flavor.

In process cheese manufacture, the Swiss-type cheese flavor composition may be used to significantly reduce, such as up to about 50 percent, of the natural Swiss cheese ingredients that otherwise are generally required, and without adversely impacting product processing ease or functionality. The reduction in aged natural Swiss cheese in particular and dry matter levels in general of a processed cheese formula achieved by using the Swiss-type cheese flavor composition as a substitute for some portion thereof can lead to significant cost savings. Normal handling operations, such as cool storage, cleaning, grinding, and the like, normally needed for natural cheese also are reduced or eliminated by using the Swiss-type cheese flavor composition. For purposes herein, an "aged cheese" is a natural cheese that has been cured for at least about six months unless otherwise indicated in context. A "natural cheese" is a cheese generally prepared from animal milk by developing acidity and setting the milk with a clotting agent, such as rennet, or by developing acidity to the isoelectric point of the protein. The set milk is cut and whey is separated form the resulting curd, which is pressed to provide a cheese block and curing takes place over a period of time controlled under controlled conditions. Again, the flavored composition product of the present invention eliminates the need for these process steps.

As used herein the term "process cheese" includes those products known and referred to as process cheeses, process cheese foods, and process cheese spreads, as those terms are defined in the U.S, Federal Standards of Identity, and also products resembling any of these in flavor and texture but which may not meet the U.S. Federal Standards of Identity for any of the above products in that they contain ingredients not specified by the Standards, such as vegetable oil or vegetable protein, or do not meet the compositional or any other requirements of such Standards. These products may be in the form of slices, blocks, spreads, or other conventional forms.

Processed cheese products generally are prepared by forming a blend of one or more comminuted hard (natural) cheeses, together with various additives commonly used in process cheese manufacture such as emulsifying salts, salt, preservatives, colorants and dairy components such as whey protein concentrates and/or dry whey. The cheese blend is heated, melted, and mixed to form a plastic homogenous emulsified molten mass, which is cooled and packed. Such processing, for example, with emulsifying salts such as sodium phosphate and/or sodium citrate in sufficient amounts for that purpose (e.g., 2-3 percent), permits manufacture of soft-bodied, easily meltable processed cheeses and processed cheese foods.

For instance, in one general conventional process for making process cheese, water is added while comminuted natural cheeses and the emulsifiers and any other additives are blended. The blended mixture may be cooked to a target temperature by the direct injection of steam either continuously or batchwise into a vessel containing the mixture. After a product-specific holding time at the target temperature, the cooked cheese product may be cooled by the direct flashing of steam from the cheese product. The molten process cheese product may be formed into a convenient or desired shape, such as individual slices, and packaged, in a conventional or otherwise suitable manner.

In order for process cheese products to have the correct texture, flavor, and meltability attributes, they generally must undergo specific temperature and shear history, A certain time at elevated temperature is needed to cook the cheese curd into a homogenous phase and to eliminate uncooked cheese. In addition to the elevated temperature, a certain degree of agitation at specific shear values is required to facilitate the melting of the cheese and emulsify the fat in the system. For instance, the cooking portion of the process cheese manufacturing process may involve a temperature ranging from about 65 to about 125°C, particularly about 70 to about 120°C, and more particularly about 75 to about 110°C, For instance, sufficient steam may be introduced into the cheese formulation to provide a molten mass and heat the molten mass to the above-indicated temperature range. The residence time inside the mixer may be from about 30 seconds to about 8 minutes, particularly about 2 to about 4 minutes. Mechanical shear is provided sufficient to facilitate heat transfer into uncooked cheese particles, Conventional mixing equipment may be used such as any type of blender (e.g., stirrer, single or double ribbon, and the like). The resulting molten cheese mass is rapidly cooled from the elevated cooking temperature to an appropriate packaging temperature. For instance, the pasteurized process cheese may be cooled in sheet form on a chill roll, cut and packaged as individual slices. It also may be hot packed. Examples of suitable processes and systems for making process cheese which may be adapted in manners described herein for practicing embodiments of the present invention are described, for example, in U.S. Pat. Nos. 4,112,131; 5,350,595; 5,470,595; and 6,183,805, which descriptions are incorporated herein by reference.

In one aspect, process cheese products containing the Swiss-type cheese flavor composition may be prepared using generally known continuous or batch processing systems with the modification that Swiss-type cheese flavor composition is incorporated into the molten homogenous mass of raw ingredients at some point before the cheese mixture is cooled. The Swiss-type cheese flavor composition may be mixed with the other starter cheese formulation ingredients before introduction of moisture and application of heat, such as by steam injection. Alternatively, or additionally, it may be introduced to the cheese formulation during steam injection, and/or during blending or agitating of the mixture after steam injection into a homogenous mass, but before cooling the mass into a non-flowable state. In process cheese manufacture, the Swiss-type cheese flavor composition may be used to reduce up to about 50 percent of natural Swiss cheese ingredient needs that otherwise may be required to achieve the desired Swiss cheese flavor profile therein.

The food products herein also may comprise a cheese analog material in part or entirely which contains the Swiss-type cheese flavor composition. A cheese analog product having flavor and body characteristics of natural Swiss-type cheese may be made by replacing at least a portion of the animal fat of the milk with a vegetable fat, such as corn oil and/or by replacing at least a portion of the casein of the milk with an analog protein, such as soy protein, and including an amount of the Swiss-type cheese flavor composition sufficient to impart Swiss-type cheese flavor.

The examples that follow are intended to further illustrate, and not limit, embodiments in accordance with the invention. All percentages, ratios, parts, and amounts used and described herein are by weight unless indicated otherwise.

### Example 1: Preparation of Swiss-type Cheese Flavor Concentrate With Free Propionic Acid Addition (Post-Thermophillic Fermentation Treatment).

This example illustrates the preparation of a Swiss-type cheese flavor concentrate made with direct addition of free propionic acid to a cultured milk concentrate which had been previously prepared with thermophillic fermentation. As the fermentation substrate and starting material, a milk concentrate was obtained from Nordmilch (Germany. The milk concentrate was an ultrafiltered retentate of sweet (fresh whole) milk, in which the resulting milk concentrate contained 44 percent total solids, a protein content of about 11 percent, a fat content of about 18 percent, and a lactose content of about 8 percent.

Prior to fermentation, the milk concentrate was pasteurized by heating in a sterile container at 82°C for 20 minutes; the pasteurized milk concentrate product was rapidly cooled to 40°C.

Thermophillic fermentation of the milk concentrate substrate (1.00 kg) was cultured at 40°C with a mixed starter culture (6 percent) containing *Lactobacillus bulgaricus* and a *Streptococcus thermophilus* for about 30-40 hours to a pH of 4-4.3, to provide a cultured milk concentrate. The cultured milk concentrate had no organoleptically detectable Swiss-type cheese flavor profile.

The cultured milk concentrate (3.2 kg) was mixed with 0.033 kg of 100 percent (pure) food grade propionic acid in a fermentation tank at about 30°C and mixed for about 10 minutes. A paste product was obtained which had a Swiss-type cheese flavor profile, as determined organoleptically; generally, such a Swiss-type cheese flavor profile was developed almost immediately after mixing.

### Example 2: Preparation of Swiss-type Cheese Flavor Concentrate With Free Propionic Acid Addition (Post-Mesophillic Fermentation Treatment).

This example illustrates the preparation of a Swiss-type cheese flavor concentrate made with direct addition of free propionic acid to a cultured milk concentrate which had been previously prepared with mesophillic fermentation. The fermentation substrate was a milk concentrate obtained from Bremerland which had the same composition as indicated for the milk concentrate used in Example 1. Prior to fermentation, the milk concentrate was pasteurized by heating it in a sterile container at 54°C for 60 minutes; the pasteurized milk concentrate product was rapidly cooled to 40°C.

Mesophillic fermentation of the milk cocentrate substrate was conducted. The milk concentrate was cultured at 30°C with a DVS mesophillic lactic acid culture (R607, Chr. Hansen; 0.01 percent) for 16 hours to a pH of 5.04, to provide a cultured milk concentrate. The cultured milk concentrate had no organoleptically detectable Swiss-type cheese flavor profile.

Food grade propionic acid (100 percent pure; 5.5 ml) was added to 494.6 g of the cultured milk concentrate at 30°C. Mixing was continued for about 2 minutes. The resulting mixture had a 1.1 percent propionic acid addition level. A paste product was obtained which developed a Swiss-type cheese flavor profile almost immediately after mixing.

### Example 3: Preparation of Process Cheese With Swiss-Type Cheese Concentrate (Pre-Acidulated Concentrate).

In this example, a process cheese was manufactured in which 30 percent of a normal amount of natural hard Swiss cheese content of a process cheese formulation was replaced by the Swiss-type cheese flavor concentrate (paste) made according Example 1.

About 7.2 kg of comminuted aged natural Swiss type cheese (Lindenberger block cheese from Kraft Foods) and approximately 4 kg of rennet casein, 0.99 kg sweet whey powder and 1.47 kg total milk protein were thoroughly mixed in a Stephan cutter. The Swiss-type cheese flavor concentrate paste (3.2 kg) of Example 1 was added to the blend with thorough mixing in the Stephan cutter. Then, approximately 0.8 kg emulsifying salts (i.e., salts of citric and phosphoric acids) were dissolved in 2 kg warm water and added to the blend and thoroughly mixed. Then, water and 3.2 kg butter were incorporated into the blend so as to obtain 30 kg of blend. Thereafter, the blend was cooked at 98°C for about 40 seconds in a standard cheese cooker with agitation and flash cooled to 89°C. Single slices were made with procedures generally known in process cheese manufacture.

The process cheese product made with the Swiss-type cheese flavor concentrate had a comparable flavor profile as a commercial cheese which was made similarly but without the substitution of the Swiss-type cheese flavor concentrate for a corresponding portion of the aged natural Swiss cheese ingredient. In this manner, aged natural Swiss cheese requirements for process cheese can be significantly reduced while maintaining an acceptable Swiss-type cheese flavor in the product.

### Example 4: Preparation of Process Cheese With Swiss-Type Cheese Concentrate (Acidulation in Cheese Base).

This example illustrates the preparation of a cultured concentrate with thermophillic fermentation and introduction of propionic acid during formulation of a cheese base for process cheese manufacture. The cultured concentrate and propionic acid were added in a total amount replacing 30 percent of the normal production amount of a natural hard Swiss cheese content of the process cheese formulation. The fermentation substrate was a milk concentrate obtained from Nordmilch which had the same composition as indicated for the milk concentrate used in Example 1. Prior to fermentation, the milk concentrate was pasteurized by heating in a sterile container at 82°C for 20 minutes; the pasteurized milk concentrate product was rapidly cooled to 40°C.

Milk concentrate (600 g) was cultured at 40°C with a mixed starter culture containing *Lactobacillus helveticus* (0.33 percent) and a *Streptococcus thermophilus* 0.33 percent) for 50 hours to a pH of 4,3, to provide a cultured milk concentrate. The cultured milk concentrate had no organoleptically detectable Swiss-type cheese flavor profile.

Process cheese singles were prepared with the following formulation ingredients charged to a cooker.

**Table 1:**

| **Cheese Base Component** | **Amount (%)** |
|---|---|
| Comminuted Natural Swiss cheese | 22.91 |
| Unsalted Butter | 17.54 |
| Rennet Casein 90 | 5.90 |
| Krafen | 3.50 |
| Total Milk Protein (MP70) | 2.50 |
| Trisodium citrate | 2.50 |
| Sodium chloride | 1.35 |
| Lactic Acid (85%) | 0.66 |
| Water' | 31.30 |
| Cultured Milk Concentrate | 11.02 |
| Pure Propionic Acid² | 0.55 |

| | |
|---|---|
| ¹ Total water including condensation. | |
| ² From 1.1 % addition amt. of 50% propionic acid solution. | |

Once all the ingredients were melted to form a homogenous mass in the cooker, the mass was poured off and recycled through the cooker for maximum mixing, and then it was heated to 92°C for 40 seconds and poured off for singles production in a conventional manner. Based on organoleptic tests conducted on samples of the product, it developed a Swiss-type cheese flavor profile almost immediately after addition.

The amount of natural Swiss cheese needed for generation of a Swiss-cheese taste in the process cheese product was effectively reduced by about 30 percent using this process.

### Example 5: Preparation of Process Cheese With Swiss-Type Cheese Composition (Acidulation in Cheese Base).

This example illustrates the preparation of a cultured concentrate with mesophillic fermentation and introduction of propionic acid during formulation of a cheese base for process cheese manufacture. The cultured concentrate and propionic acid were added in a total amount replacing 30 percent of the normal production amount of a natural hard Swiss cheese content of the process cheese formulation.

The fermentation substrate was a milk concentrate obtained as a 5X ultrafiltered/diafiltered skim milk product in which the resulting milk concentrate contained 43.5 percent total solids, a protein content of about 16 percent, a fat content of about 23 percent, and a lactose content of about 3 percent. Mesophillic fermentation of the milk concentrate substrate was conducted with a DVS mesophillic lactic acid culture (0.01 percent, R607, Chr. Hansen) at 30°C for 48 hours to a pH of 5.03.

The cultured milk concentrate had no organoleptically detectable Swiss-type cheese flavor profile.

Process cheese singles were prepared with the following formulation ingredients charged to a cooker.

**Table 2:**

| **Cheese Base Component** | **Amount (%)** |
|---|---|
| Comminuted Natural Swiss cheese | 24.3 |
| Unsalted Butter | 17.5 |
| Rennet Casein 90 | 5.9 |
| Krafen | 3.5 |
| Total Milk Protein (MP70) | 2.5 |
| Trisodium citrate | 2.5 |
| Sodium chloride | 1.35 |
| Lactic Acid (80%) | 0.65 |
| Water¹ | 31.3 |
| Cultured Milk Concentrate | 11.0 |
| Pure Propionic Acid² | 0.11 |

| | |
|---|---|
| ¹ Total water including condensation. | |
| ² From 0.22% addition of 50% propionic acid solution. | |

Once all the ingredients were melted to form a homogenous mass in the cooker, the mass was poured off and recycled through the cooker for maximum mixing, and then it was heated to 92°C for 40 seconds and poured off for singles production in a conventional manner. Based on organoleptic tests conducted on samples of the product, it developed a Swiss-type cheese flavor profile, including the nutty flavor characteristic thereof, almost immediately.

Analytical tests performed on the inventive process cheese product ("Sample 1 ") and, for comparison, a commercial brand of Swiss-flavored process cheese (Sottilette®, Kraft Foods) yielded the following results.

**Table 3:**

| | **Inventive Product** | **Commercial Product** |
|---|---|---|
| **Composition** | | |
| NPN (%) | 0.2 | 0.4 |
| salt (%) | 1.77 | 1.7 |
| lactose (%) | 3.5 | 3.2 |
| protein (%) | 15.7 | 16.1 |
| moisture (%) | 50.2 | 52.0 |
| fat (%) | 24.3 | 22.1 |

| **Gels-Bio** | | |
|---|---|---|
| α-casein (%) | 27 | 27 |
| β-casein (%) | 36 | 32 |
| 11-20k (%) | 11 | 15 |
| α-Lg (%) | 5 | 4 |
| ρ-κ casein (%) | 11 | 12 |
| 9-11k (%) | 7 | 8 |

| **Fatty Acids** | | |
|---|---|---|
| acetic acid (ppm) | 489 | 334 |
| propionic acid (ppm) | 2160 | 1907 |
| butyric acid (ppm) | 74 | 150 |
| hexanoic acid (ppm) | 30 | 27 |
| octanoic acid (ppm) | 25 | 14 |
| decanoic acid (ppm) | 62 | 31 |
| dodecanoic acid (ppm) | 88 | 61 |

The amount of natural Swiss cheese needed for generation of a Swiss-cheese taste in the process cheese product was still effectively reduced 30 percent by this process even at the lower addition rate of propionic acid.

### Example 6: Preparation of Process Cheese With Swiss-Type Cheese Composition (Acidulation In Cheese Base).

This example illustrates the preparation of a cultured concentrate with mesophillic fermentation, and introduction of propionic acid during formulation of a cheese base for process cheese manufacture. The cultured concentrate and propionic acid were added in a total amount replacing 10 percent of the normal production amount of a natural hard Swiss cheese content of the process cheese formulation.

The fermentation substrate was a 5X milk concentrate such as described in Example 6. Mesophillic fermentation of the milk concentrate substrate was conducted with a DVS mesophillic lactic acid culture (0,01 percent, R607, Chr. Hansen) at 30°C for 48 hours to a pH of 5,03.

The cultured milk concentrate had no organoleptically detectable Swiss-type cheese flavor profile.

Process cheese singles were prepared with the following formulation ingredients charged to a cooker.

**Table 4**

| **Cheese Base Component** | **Amount (%)** |
|---|---|
| Comminuted Natural Swiss cheese | 31.2 |
| Unsalted Butter | 17.5 |
| Rennet Casein 90 | 5.9 |
| Krafen | 3.5 |
| Total Milk Protein (MP70) | 2.5 |
| Trisodium citrate | 2.5 |
| Sodium chloride | 1.35 |
| Lactic Acid (80%) | 0.65 |
| Water¹ | 31.3 |
| Cultured Milk Concentrate | 3.46 |
| Pure Propionic Acid² | 0.04 |

| | |
|---|---|
| ^{1.} Total water including condensation. | |
| ² From 0.08% addition amount of 50% propionic acid solution. | |

Once all the ingredients were melted to form a homogenous mass in the cooker, the mass was poured off and recycled through the cooker for maximum mixing, and then it was heated to 92°C for 40 seconds and poured off for singles production in a conventional manner. Based on organoleptic tests conducted on samples of the product, it had a Swiss-type cheese flavor profile including the nutty flavor characteristic thereof almost immediately.

Analytical tests performed on the obtained process cheese product ("Sample 2")and, for comparison, a commercial brand of Swiss-flavored process cheese (Sottilette®, Kraft Foods) yielded the following results.

**Table 5:**

| | **Inventive Product** | **Commercial Product** |
|---|---|---|
| **Composition** | | |
| NPN (%) | 0.1 | 0.4 |
| saft (%) | 1.65 | 1.7 |
| lactose (%) | 3.16 | 3.2 |
| protein (%) | 16.0 | 16.1 |
| moisture (%) | 50.0 | 52.0 |
| fat (%) | 24.5 | 22.1 |

| **Gels-Bio** | | |
|---|---|---|
| α-casein (%) | 25 | 27 |
| β-casein (%) | 38 | 32 |
| 11-20k (%) | 10 | 15 |
| α-Lg (%) | 4 | 4 |
| ρ-K casein (%) | 12 | 12 |
| 9-11k (%) | 8 | 8 |

| **Fatty Acids** | | |
|---|---|---|
| acetic acid (ppm) | 598 | 334 |
| propionic acid (ppm) | 1908 | 1907 |
| butyric acid (ppm) | 90 | 150 |
| hexanoic acid (ppm) | 37 | 27 |
| octanoic acid (ppm) | 28 | 14 |
| decanoic acid (ppm) | 71 | 31 |
| dodecanoic acid (ppm) | 98 | 61 |

The amount of natural Swiss cheese needed for generation of a Swiss-cheese taste in the process cheese product was effectively reduced 10 percent by this process.

### Example 7: Preparation of Process Cheese With Swiss-Type Cheese Composition (Acidulation in Cheese Base).

This example illustrates the preparation of a cultured concentrate with mesophillic and thermophillic fermentation of an enzyme-inoculated 5X milk concentrate, and introduction of propionic acid during formulation of a cheese base for process cheese manufacture. The cultured concentrate and propionic acid were added in a total amount replacing 30 percent of the normal production amount of a natural hard Swiss cheese content of the process cheese formulation.

The fermentation substrate was a modified version of the 5X milk concentrate such as described in Example 6. The 5X milk concentrate was pasteurized and fortified with sterile lactose to 2 percent and a sterile salt solution. The resulting milk concentrate was cooled to 30°C, and then inoculated with lipase and protease enzymes obtained commercially as R2 enzyme (0.02 percent, SKW), and a DVS mesophillic lactic acid culture (0,005 percent, R607, Chr. Hansen), and the mixture was incubated at 30°C for 24 hours to a pH of 5.21. The mesophillic lactic acid culture was used for rapid acid production to initially improve stability of the milk concentrate. After 24 hours incubation the temperature was increased to 40°C and the fermentation mixture was inoculated with a strain of *Lactobacillus helveticus* (0.2 percent bulk starter) and the resulting mixture was incubated for 32 additional hours at 40°C to a pH of 4.59. The resulting cultured milk concentrate had no organoleptically detectable Swiss-type cheese flavor profile.

Process cheese singles were prepared with the following formulation ingredients charged to a cooker.

**Table 6:**

| **Cheese Base Component** | **Amount (%) (wt.)** |
|---|---|
| Comminuted Natural Swiss cheese | 24.30 |
| Unsalted Butter | 17.50 |
| Rennet Casein 90 | 5.90 |
| Krafen | 3.50 |
| Total Milk Protein (MP70) | 2.50 |
| Trisodium citrate | 2.50 |
| Sodium chloride | 1.35 |
| Lactic Acid (80%) | 0.65 |
| Water¹ | 31.30 |
| Cultured Milk Concentrate | 11.02 |
| Pure Propionic Acid² | 0.11 |

| | |
|---|---|
| ^{1.} Total water including condensation. | |
| ^{2.} From 0.22% addition of 50% propionic acid solution. | |

Once all the ingredients were melted to form a homogenous mass in the cooker, the mass was poured off and recycled through the cooker for maximum mixing, and then it was heated to 92°C for 40 seconds and poured off for singles production in a conventional manner. Based on organoleptic tests conducted on samples of the product, it developed a well-balanced, pleasant and nutty flavor characteristics almost immediately. From a flavor profile standpoint, it was indistinguishable from a commercial sample of natural Swiss cheese, used as reference sample.

Analytical tests performed on the obtained process cheese product ("Sample 3") and, for comparison, the above-indicated reference sample of hard natural Swiss cheese yielded the following results.

**Table 7:**

| | **Inventive Product** | **Commercial Product** |
|---|---|---|
| **Composition** | | |
| NPN (%) | 0.1 | 0.1 |
| salt (%) | 1.68 | 1.58 |
| lactose (%) | 3.10 | 3.02 |
| protein(%) | 15.5 | 16.1 |
| moisture (%) | 52.9 | 50.5 |
| fat (%) | 22.5 | 24.7 |
| pH | 5.55 | 5.78 |

| **Gels-Bio** | | |
|---|---|---|
| α-casein (%) | 29 | 28 |
| β-casein (%) | 32 | 34 |
| 11-20k (%) | 11 | 13 |
| α-Lg (%) | 5 | 4 |
| ρ-κ casein (%) | 10 | 11 |
| 9-11k (%) | 11 | 9 |

| **Fatty Acids** | | |
|---|---|---|
| acetic acid (ppm) | 449 | 559 |
| propionic acid (ppm) | 1827 | 1415 |
| butyric acid (ppm) | 66 | 64 |
| hexanoic acid (ppm) | 22 | 20 |
| octanoic acid (ppm) | 15 | 17 |
| decanoic acid (ppm) | 46 | 54 |
| dodecanoic acid (ppm) | 65 | 80 |

The amount of natural Swiss cheese needed for generation of a Swiss-cheese taste in the process cheese product was effectively reduced 30 percent by this process,

### Example 8: Preparation of Swiss-Type Cheese Concentrate With In situ Propionic Acid Generation.

A series of experiments were conducted on various diary substrate formulations to assess whether a concentrate product having a Swiss-type cheese taste could be manufactured with *in situ* propionic acid generation via propionibacterium culturing without the need for an extended cheese curing step.

The substrates used in these studies were formulated using various combinations of the following raw materials.

*Milk Paste* ("MP"): a milk concentrate obtained from Nordmilch, Germany, or KJS Namur, Belgium. The milk concentrate was a high solids content, ultrafiltered retentate of skim milk. The paste had a mild and milky flavor similar to an unripened cheese. The milk paste was kept under refrigerated storage conditions and used within three weeks of production.

*Fermented Milk Paste ("FMP"):* the fermented milk paste was derived from milk paste, modified to have a low lactose level and strong textural body. The final paste was still pumpable. The lactose level was reduced through a culturing step in which milk paste was fermented with *Lactobacillus Helveticus* (about 1 g per 36 kg), LH100, Texel) for about 48 hours at 37°C. The product obtained was acidified by the fermentation to a pH of approximately 3.8.

*Enzymatic-Modified Cheese Paste ("EMC")*: this paste was an enzymatically-modified milk paste. Milk paste was mixed with a cocktail of lipases and proteases (0.02 percent, R2, SKW) and incubated for about 48 hours at 39°C. The paste product had a strong cheesy taste (but not Swiss-type). The enzymatically-modified paste product was heat-treated at 85°C for 30 minutes to inactivate the enzymes; the developed flavor was not significantly affected by enzyme deactivation.

The compositions of the different raw materials are summarized in the table below, in which all amounts are reported as weight percent amounts.

**Table 8:**

| | Skim Milk | MP | FMP | EMC |
|---|---|---|---|---|
| Dry Matter | 12.5 | 43.5 | 43.5 | 43.5 |
| Fat (%) | 3.5 | 19.8 | 19.8 | 19.8 |
| Lactose (%) | 4.7 | 8.5 | 2 | 5 |
| Lactic Acid (%) | - | 0.72 | 3.21 | 1.87 |
| Proteins (%) | 3.4 | 12 | 12 | 12 |
| pH | 6.7 | 6.4 | 3.8 | 5.0 |

Trial 1. As an initial trial study, milk paste alone or in combination with either the fermented milk paste or the enzymatically-modified cheese paste were studied to initially assess the effect of the substrate formulation and certain processing variables interest, on the organoleptic properties of the paste products.

Six paste samples (P1-P6) were studied in this initial trial, which had the following starting compositions.

**Table 9:**

| **Sample** | **Starting Components (g)** | | | | |
|---|---|---|---|---|---|
| | **MP** | **EMC** | **FMP** | **Total** | **pH** |
| P1 | 1560.2 | 0 | 0 | 1560.2 | 6.45 |
| P2 | 1581.5 | 0 | 0 | 1581.5 | 6.45 |
| P3 | 1568.0 | 0 | 0 | 1568.0 | 6.42 |
| P4 | 1579.6 | 0 | 0 | 1579.6 | 6.42 |
| P5 | 779.1 | 774.1 | 0 | 1553.9 | 5.58 |
| P6 | 1206.6 | 0 | 129.4 | 1336.0 | 5.71 |

For the incubation studies, the amount of *L. helveticus* (LH100, Texel) was fixed at 0.17 units (0.14 g) for each sample in which it was included. Propionibacteria ("PAB") was added to each sample as 5 mL of liquid culture (5 g), and the strain of Propionibacteria used was *Propionibacterium freudenreichii sbp Shermanii* (Kraft Jacobs Suchard). It was kept in peptone solution at 4°C until used. An enzyme blend was included in several of the test samples, which was comprised of Bromelain 40 u/g (0.2 percent), Promod 215P (0.229 percent), Enzobact LH (0.212 percent), and R2 (0.260 percent).

Incubation Conditions. Two water-baths were used at two different incubation conditions, 30°C and 40°C. After adding the cultures to the paste, mixing was used to equally distribute the bacteria. Then, the blends were placed in an 80°C water bath in order to increase quickly their temperature (all the pastes samples except P6 were held overnight in a 4°C cold room). As the target temperature of 30°C was measured in the paste, they were transferred to the incubation water-bath where they stayed for the duration of the experiment. The temperature of the second water-bath was decreased to 40°C in order to obtain optimal incubation conditions for P1 and P4.

The particular incubation conditions used for each of sample pastes P1-P6 were as follows.
- P1:: 1, addition at the same time of LH100 and PAB to paste
2. mixing and pH measurement
3. placement of the blend in the 40°C water bath
4. transfer to the 30°C water bath when pH of 5.6 is reached.
- P2;: 1. addition of LH100 to paste
2. mixing and pH measurement
3. placement of the blend in the 40°C water bath
4. transfer to the 30°C water bath when pH of 5.6 is reached
5, addition of PAB at the same time.
- P3:: 1. addition of LH100, PAB and enzymes to paste
2. mixing and pH measurement
3. placement of the blend in the 40°C water bath
- P4:: 1. addition of LH100 to paste
2. mixing and pH measurement
3. placement of the blend in the 40°C water bath
4. transfer to the 30°C water bath when pH of 5.6 is reached.
- P5:: 1. addition of PAB to paste
2. mixing and pH measurement
3. placement of the blend top in the 30°C water bath
- P6:: 1. addition of PAB to paste
2. mixing and pH measurement
3. placement of the blend top in the 30°C water bath

At the end of the experiments, but before cooling pastes P3 and P4, the enzymes were inactivated in a Thermomix (Vorwerk) at 85°C during 30 minutes, mixing level 3. First the samples were heated at 100°C to quickly to reach the target temperature and then were heated for 30 minutes at 85°C.

Paste Evaluations. After approximately 48 hours storage in a cold room (4°C), the product pastes P1-P6 were evaluated organoleptically. A panel of four persons having expertise in sensory evaluations of cheese tested the taste and appearance of the test pastes found that pastes P5 and P6 provided the best results. Their total flavor was more intense without as much bitter aftertaste as in pastes P1-P4. The Swiss-type flavor was present in pastes P5 and P6, and their texture was superior than the other tastes.

*Trial II.* Additional experiments were performed to further evaluate the effects of combining the milk paste with one or both of the fermented milk paste and the enzymatically-modified cheese paste, on the organoleptic properties of the product.

Six paste samples PT1-PT6 were studied in this follow-up trial, which had the following starting compositions.

**Table 10:**

| **Sample** | **Component (g)** | | | | |
|---|---|---|---|---|---|
| | **MP** | **EMC** | **FMP** | **Total** | **pH** |
| PT1 | 1309.1 | 1129.1 | 0 | 2438.2 | 5.60 |
| PT2 | 1476.5 | 904.1 | 0 | 2380.6 | 5.69 |
| PT3 | 1755.2 | 0 | 211.8 | 1967.0 | 5.69 |
| PT4 | 1740.0 | 0 | 199.7 | 1939.7 | 5.75 |
| PT5 | 1558.8 | 520.4 | 123.0 | 2202.2 | 5.62 |
| PT6 | 1414.7 | 516.1 | 105.5 | 2036.3 | 5.60 |

These six pastes with the above-indicated starting compositions were obtained by mixing the different components MP, EMC, and FMP (described above) in a blend top. *Propionibacterium* (PAB; 5 g) was added to each starting paste for PT1-PT6, Oxygen exchange in the culturing vessel was limited by placing a plastic foil in addition to the normal cover.

Incubation Conditions. Two water-baths were used at two different incubation conditions, 80°C and 30°C. After adding the cultures to the paste, a mixing was done to equally distribute the bacteria. Then, the blends were placed in an 80°C water bath in order to increase quickly their temperature (all the pastes samples were taken from a 4°C cold room, and the starting temperature was approximately 10°C). As the target temperature of 30°C was measured in the paste, they were transferred to the incubation water-bath where they stayed for the duration of the experiment.

Inactivation of *Propionbacterium.* After being held for two days in the water bath, each paste was split into two parts. Both half parts were later incorporated into a formulation of processed cheese. One part was kept in the water bath for one additional day, in order to monitor any changes in the taste. The other samples were either directly cooled down to 4°C or heated to inactivate the enzyme before being cooled down to 4°C. The inactivation was done in a Thermomix (Vorwerk) at 63-65°C during 30 minutes, mixing level 2. First the samples were heated at 100°C to quickly to reach the target temperature and then were heated for 30 minutes at 63-65°C. After approximately 48 hours storage in a cold room (4°C), the product pastes P1-P6 were evaluated organoleptically.

The heat treatments applied to the various pastes are summarized in the following table.

**Table 11: Heat Treatments of Pastes after 2 and 3 days in 30°C water bath**

| | **PT1** | **PT2** | **PT3** | **PT4** | **PT5** | **PT6** |
|---|---|---|---|---|---|---|
| **2 days at 30°C** | | | | | | |
| **Time (hrs.)** | 65 | 65 | 65 | 65 | 65 | 65 |
| **Treatment** | Inactivated | cool | Inactivated | cool | cool | Inactivated |
| **End pH** | 5.19 | 5.08 | 4.10 | 4.10 | 4.89 | 4.89 |

| **3 days at 30°C** | | | | | | |
|---|---|---|---|---|---|---|
| **Time (hrs.)** | 87.5 | 87.5 | 87.5 | 87.5 | 87.5 | 87.5 |
| **Treatment** | Inactivated | cool | cool | Inactivated | Inactivated | cool |
| **End pH** | 4.70 | 4.56 | 3.84 | 3.84 | 4.20 | 4.23 |

Paste Evaluations. After approximately 48 hours storage in a cold room (4°C), the product pastes PT1-PT6, including both the 2-day and 3-day incubation portions thereof, were evaluated organoleptically. A panel of four persons having expertise in sensory evaluations of cheese tested the taste and appearance of the test pastes found that Pastes PT1 and PT6 had the most pronounced Swiss-type flavor characteristics for both incubation period groups.

Cheese Making. Bench top scale batches of processed cheese were prepared with PT1 and PT6 pastes using samples taken from each incubation period grouping thereof (i.e., 65 hrs. and 87,5 hrs.). Therefore, four different pastes were studied in the cheese making trials (i.e., PT1-65 hrs., PT1-87.5 hrs., PT6-65hrs., and PT6-87.5 hrs.). These four different pastes were individually incorporated into two different cheese formulations. One cheese formulation contained 20 percent natural Swiss cheese, and the second cheese formulation contained 15 percent natural Swiss cheese.

An amount of 1.5 kg of conventional processed cheese was prepared for each cheese formulation using the pastes. The cheese batches were cooked in a Thermomix (Vorwerk) for 6 minutes at 80°C for the first recipe (i.e., containing 20 percent natural Swiss cheese) used and for 60 seconds at 85°C for the second one (i.e, containing 15 percent natural Swiss cheese). After cooking, the processed cheeses were poured into Jocca cups and then sealed. The cups were put in the cold room at 4°C in order to lower the product temperature.

Cheese Evaluations. After approximately two or three days storage in the cold room, one sample of each test cheese was opened. A panel of four persons having expertise in sensory evaluations of cheese tested the taste and appearance of the various product cheeses. Each new cheese formulation was evaluated by comparison with a standard, commercial Swiss cheese product. Cheeses made with pastes PT1 (20 percent), PT5 (15 percent), and PT6 (20 percent) were judged to have Swiss-type flavor, with increasing flavor in the same order. The cheeses made with paste PT6 were judged to be the most similar to the standard Swiss cheese.

Among other findings, the results of these trials indicated that the paste mixes containing EMC developed a better taste even with the smallest propionate concentration. The results also indicated that production of propionic acid per se in a medium is not enough to obtain a good flavored paste.

While the invention has been particularly described with specific reference to particular process and product embodiments, it will be appreciated that various alterations, modifications and adaptations may be based on the present disclosure, and are intended to be within the spirit and scope of the present invention as defined by the following claims.

## Claims

1. , Swiss-type cheese flavor composition for food products comprising (a) a cultured milk concentrate prepared by treating a milk concentrate with a lactic acid culture at a temperature of about 22 to about 45°C for about 10 to about 240 hours, and (b) propionic acid or an edible salt thereof, wherein the Swiss-type cheese flavor is developed after adding the propionic acid or edible salt thereof.

2. The flavor composition according to claim 1, wherein the flavor composition comprises a flavor note corresponding with a natural Swiss cheese flavor note.

3. The flavor composition according to Claim 1 or 2, wherein propionic acid is present in an amount of at least 75 percent more than the amount of propionic acid that would be present in an equal mass of natural Swiss cheese prepared by culturing milk and fermentation agents including the lactic acid culture and propionibacteria, followed by whey separation, and aging in pressed block form for about 6 months.

4. The flavor composition according to Claim 1 or 2, wherein propionic acid is present in an amount of about 90 percent to about 110 percent more than the amount of propionic acid that would be present in an equal mass of natural Swiss cheese prepared by culturing milk and fermentation agents including the lactic acid culture and propionibacteria, followed by whey separation, and aging in pressed block form for about 6 months.

5. The flavor composition according to any one of Claims 1 to 4, wherein said composition is a paste.

6. The flavor composition according to any one of Claims 1 to 5, wherein the composition is a dried powder.

7. A food product containing a Swiss-type cheese flavor composition, wherein the Swiss-type cheese flavor composition comprises (a) cultured milk concentrate prepared by treating milk concentrate with a lactic acid culture at a temperature of about 38 to about 42°C for about 16 to about 60 hours, and (b) propionic acid or an edible salt thereof, wherein a Swiss-type cheese flavor in the Swiss-type cheese flavor composition is developed adding the propionic acid or edible salt thereof.

8. The food product according to Claim 7, wherein the food product is processed cheese, snack food, natural cheese, cheese spread, or cream cheese.

9. The food product according to Claim 7, wherein the food product has a filling comprising cheese containing the Swiss-type cheese flavor composition.

10. A process for making a Swiss-type cheese flavor composition, said comprising the steps of:
(A) treating a milk concentrate with a lactic acid culture at a temperature of about 22 to about 45°C for about 10 to about 240 hours, to prepare a cultured milk concentrate;
(B) adding propionic acid or an edible salt thereof to either the milk concentrate in step (A) or to the cultured milk concentrate from step (A) in an amount effective to obtain the Swiss-type cheese flavor composition, wherein a Swiss-type cheese flavor in the Swiss-type cheese flavor composition is developed after adding the propionic acid or edible salt thereof.

11. The process of Claim 10, wherein the treating of the milk concentrate with lactic acid culture is allowed to proceed until a cultured milk concentrate is obtained having a pH of 5.6 to 4.

12. The process of Claim 10 or 11, wherein the propionic acid or edible salt thereof is added in an amount to provide at least 75 percent of a conventional amount of propionic acid that would be present in an equal mass of natural Swiss cheese prepared by conventional techniques and aging in pressed block form for about 6 months.

13. The process of Claim 10 or 11, wherein the propionic acid or edible salt thereof is added in an amount to provide at least 90 percent of a conventional amount of propionic acid that would be present in an equal mass of natural Swiss cheese prepared by conventional techniques and aging in pressed block form for about 6 months.

14. The process of Claim 10 or 11, wherein the propionic acid or edible salt thereof is added in an amount to provide about 90 percent to about 110 percent of a conventional amount of propionic acid that would be present in an equal

15. The process of any one of Claims 10 to 14, wherein the lactic acid culture comprises a coccus culture comprising *Lactobacillae* and a rod culture comprising *Streptococcus thermophilus.*

16. The process of Claim 15, wherein the *Lactobacillae* are selected from the group consisting of *Lactobacillus bulgaricus, Lactobacillus lactis, Lactobacillus Helveticus, Lactobacillus delbrueckii ss. lactis,* or mixtures thereof.

17. The process of any one of Claims 10 to 16, wherein step (b) comprises adding (1) *Propionibacteria* and (2) a milk concentrate comprising a blend of cultured milk concentrate, non-cultured milk concentrate, and enzyme-modified milk concentrate.

18. The process of Claim 17, wherein the *Propionibacteria* is selected from the group consisting of *Propionibacterium shermanii, P. freudenreichii, P. acidi-propionici, P. pentosaceum, P. thoenii, P. arabinosum, P. rubrum, P. jensenii, P. peterssonii,* or mixtures thereof.

19. A process for preparing a flavored cheese using a Swiss-type cheese flavor composition, said process comprising:
(1) preparing a cheese or dairy base; and
(2) incorporating about 1 to about 10 percent of a Swiss-type cheese flavor composition into the cheese or dairy base to form the flavored cheese;
wherein the Swiss-type flavor composition comprises a mixture including (a) a cultured milk concentrate prepared by treating milk concentrate with a lactic acid culture at a temperature of about 22 to about 45°C for about 10 to about 240 hours, and (b) propionic acid or an edible salt thereof, wherein the proprionic acid or edible salt thereof is added to either the milk concentrate the cultured milk concentrate in an amount effective to obtain the Swiss-type cheese flavor composition, wherein a Swiss-type cheese flavor in the Swiss-type cheese flavor composition is developed after adding the propionic acid or edible salt thereof,

20. A process for preparing processed cheese, said process comprising:
(a) preparing a cheese blend comprising cheese and an emulsifier;
(b) heating the blend to a temperature sufficient to form a homogenous molten mass;
(c) adding Swiss-type flavor composition to the blend, before, during and/or after the heating, wherein the Swiss-type flavor composition comprises a mixture including (a) a cultured milk concentrate prepared by treating milk concentrate with a lactic acid culture at a temperature of about 22 to about 45°C for about 10 to about 240 hours, and (b) propionic acid or an edible salt thereof, wherein the proprionic acid or edible salt thereof is added to either the milk concentrate the cultured milk concentrate in an amount effective to obtain the Swiss-type cheese flavor composition, wherein a Swiss-type cheese flavor in the Swiss-type cheese flavor composition is developed after adding the propionic acid or edible salt thereof.;
(d) cooling the heated blend containing the Swiss-type flavor concentrate to form a processed cheese product.

21. A process for preparing flavored cheese using a Swiss-type cheese flavor composition, said process comprising:
(a) preparing a milk substrate suitable for producing a cheese;
(b) incorporating about 1 to about 10 percent by weight of a Swiss-type flavor composition into the milk substrate;
(c) treating the milk substrate and Swiss-type flavor composition to set the milk substrate;
(d) cutting the set milk substrate to form curds and whey;
(e) cooking the curds and whey;
(f) separating the curds and whey; and
(g) forming the flavored cheese from the separated curds;
wherein the Swiss-type flavor composition comprises a mixture including (a) a cultured milk concentrate prepared by treating milk concentrate with a lactic acid culture at a temperature of about 22 to about 45°C for about 10 to about 240 hours, and (b) propionic acid or an edible salt thereof, wherein the proprionic acid or edible salt thereof is added to either the milk concentrate the cultured milk concentrate in an amount effective to obtain the Swiss-type cheese flavor composition, wherein a Swiss-type cheese flavor in the Swiss-type cheese flavor composition is developed after adding the propionic acid or edible salt thereof.
